(19) Europäisches Patentamt
European Patent Office
Office européen des brevets

(11) Numéro de publication : **0 616 732 B1**

# (12) FASCICULE DE BREVET EUROPEEN

(45) Date de publication du fascicule du brevet : **06.12.95 Bulletin 95/49**

(51) Int. Cl.⁶ : **H01M 4/48,** H01M 4/58

(21) Numéro de dépôt : **93902314.9**

(22) Date de dépôt : **09.12.92**

(86) Numéro de dépôt international : **PCT/FR92/01167**

(87) Numéro de publication internationale : **WO 93/12550 24.06.93 Gazette 93/15**

## (54) UTILISATION DE BRONZES D'OXYDE DE VANADIUM AU FER ET/OU A L'ALUMINIUM COMME MATERIAU CATHODIQUE DANS DES GENERATEURS ELECTROCHIMIQUES.

(30) Priorité : **13.12.91 FR 9115495**

(43) Date de publication de la demande : **28.09.94 Bulletin 94/39**

(45) Mention de la délivrance du brevet : **06.12.95 Bulletin 95/49**

(84) Etats contractants désignés : **AT BE CH DE DK ES FR GB GR IE IT LI LU MC NL PT SE**

(56) Documents cités :
**FR-A- 2 616 013**
**MATERIALS RESEARCH BULLETIN. vol. 25, 1990, OXFORD GB pages 705 - 713 N. BAFFIER ET AL 'SYNTHESIS OF VANADIUM BRONZES MxV2O5 THROUGH SOL-GEL PROCESSES. II-ORTHORHOMBIC BRONZES (M=Ba2+, Ni2+, Al3+, Fe3+)'**

(73) Titulaire : **CENTRE NATIONAL D'ETUDES SPATIALES**
**2, Place Maurice Quentin**
**F-75001 Paris (FR)**

(72) Inventeur : **WILLMANN, Patrick**
**5, chemin Pinatel**
**F-31450 Montgiscard (FR)**
Inventeur : **PEREIRA-RAMOS, Jean-Pierre**
**11, rue des Moissonneurs**
**F-94440 Marolles-en-Brie (FR)**
Inventeur : **BADDOUR-HADJEAN, Rita**
**21, Impasse de l'Espérance**
**F-93460 Gournay sur Marne (FR)**
Inventeur : **BAFFIER, No[l**
**20, avenue du Ruisseau**
**F-91440 Bures-sur-Yvette (FR)**

(74) Mandataire : **Des Termes, Monique**
**Société Brevatome**
**25, rue de Ponthieu**
**F-75008 Paris (FR)**

EP 0 616 732 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a pour objet l'utilisation de bronzes d'oxyde de vanadium comme matériau cathodique dans des générateurs électrochimiques.

Elle s'applique en particulier aux générateurs électrochimiques secondaires dont le fonctionnement est basé sur l'intercalation d'un ion métallique tel que le lithium dans le matériau cathodique.

Depuis près de vingt ans, la mise en oeuvre de générateurs électrochimiques primaires au lithium a permis de disposer de sources d'énergie plus performantes que les piles traditionnelles, en ce qui concerne la densité d'énergie, la durée de vie et le fonctionnement dans un large domaine de températures.

Ces générateurs primaires sont utilisés en particulier pour l'alimentation d'appareils nécessitant de faibles densités de courant, tels que des montres, des calculatrices ou pour le maintien de mémoires.

Etant donné les bonnes performances de ces générateurs primaires au lithium, on a effectué de nombreuses recherches en vue de réaliser des générateurs secondaires au lithium, ayant les caractéristiques propres aux piles à anode de lithium et la durée de service plus importante des accumulateurs. Le développement de tels générateurs implique la réversibilité des réactions mises en jeu à l'anode comme à la cathode.

Aussi, de nombreux travaux ont été consacrés à la recherche de matériaux cathodiques pouvant insérer réversiblement des ions métalliques tels que les ions lithium. Parmi ces matériaux, on a largement étudié ceux à base d'oxyde de vanadium $V_2O_5$ qui sont très performants en raison du potentiel standard très élevé de $V^{5+}$ et de la compatibilité du potentiel d'oxydation de ces matériaux avec le domaine de stabilité des électrolytes organiques habituellement utilisés dans les générateurs électrochimiques. De plus, $V_2O_5$ présente une structure intermédiaire entre la structure tunnel des oxydes de type rutile et celle en feuillets des oxydes de type $MoO_3$.

Les caractéristiques de fonctionnement d'un générateur électrochimique secondaire utilisant $V_2O_5$ comme matériau d'électrode vont dépendre en grande partie de la réversibilité de la réaction d'insertion d'un métal tel que le lithium ($Li^+$) dans le réseau hôte de l'oxyde $V_2O_5$, selon le schéma réactionnel :

$$V_2O_5 + xe^- + xLi^+ \rightleftharpoons Li_xV_2O_5$$

On cherche donc à obtenir une bonne réversibilité de ce processus, si possible pour une tension élevée, avec une capacité faradique maximale, c'est-à-dire un taux d'insertion du lithium x maximal, ceci sur un nombre important de cycles galvanostatiques.

En ce qui concerne le comportement en cyclages de $V_2O_5$, on sait que la réduction à courant constant de $V_2O_5$ en milieu électrolytique usuel s'effectue en quatre étapes distinctes comme il est décrit par Kumagai et al dans Electrochimica Acta, 28, 1983, p. 17-22.

La figure 1 illustre la courbe typique de décharge de $V_2O_5$ dans du carbonate de propylène contenant 1mol/l de $LiClO_4$, à 20°C, en utilisant $V_2O_5$ à la cathode et une anode de lithium.

Sur cette figure qui représente l'évolution du potentiel en fonction de la quantité de lithium échangée, on voit que les deux premiers paliers de cette réduction, qui sont caractérisés par un potentiel supérieur à 3V et un domaine de composition $Li_yV_2O_5$ avec $0 \leqq y \leqq 1$, correspondent au cyclage classique des générateurs $Li/V_2O_5$ pour lesquels une parfaite réversibilité est observée. Le troisième palier correspond à une perte partielle de réversibilité dont le mécanisme n'est pas complètement élucidé, et une complète irréversibilité est observée après une décharge profonde engageant plus de 2,4 ions lithium.

Aussi, de nombreuses recherches ont été poursuivies pour améliorer la cyclabilité des matériaux apparentés à $V_2O_5$ afin de mettre en jeu une réduction plus poussée engageant les troisième et quatrième étapes d'insertion situées à 2,2 et 1,8V. Des matériaux d'électrode mettant en jeu une réduction plus poussée ont été décrits par exemple par Cocciantelli et al dans Journal of Power Sources, 34, 1991, p. 103-111, et FR-A- 2 655 777, et par Delmas et al dans Journal of Power Sources, 34, 1991, p. 113-118 et WO 90/11623.

Ainsi, dans ces deux documents, on a augmenté la capacité massique d'un générateur électrochimique en augmentant le taux d'insertion du lithium.

D'autres recherches sur des matériaux à base d'oxyde de vanadium ont abouti à la réalisation de bronzes d'oxydes métalliques tels que $Na_{0,33}V_2O_5$ par un procédé sol-gel, pour améliorer les performances de ce type de matériau comme il est décrit dans FR-A- 2 616 013.

A la suite de recherches récentes, on a mis au point d'autres matériaux cathodiques à base de bronze d'oxyde de vanadium, qui présentent des propriétés améliorées par rapport à $V_2O_5$ en raison de la présence d'éléments appropriés.

Aussi, l'invention a pour objet un générateur électrochimique comprenant une anode, une cathode comprenant un matériau cathodique à base d'oxyde de vanadium et un électrolyte conducteur par des ions susceptibles d'être intercalés dans le matériau cathodique, caractérisé en ce que le matériau cathodique est un bronze d'oxyde de vanadium de formule :

$$M^1_{x_1}M^2_{x_2}V_2O_5$$

dans laquelle $M^1$ représente le fer ou l'aluminium trivalent, $M^2$ représente un métal différent de $M^1$ de valence $\underline{n}$ choisi parmi les métaux alcalins, les métaux alcalinoterreux, les métaux de transition et l'aluminium, et $x_1$ et $x_2$ sont tels que
$0{,}06 \leqq x_1 \leqq 0{,}13$ ;
$0 \leqq x_2 \leqq 0{,}20$ ; et
$0{,}27 \leqq 3x_1 + nx_2 \leqq 0{,}39$.

Dans ce bronze d'oxyde de vanadium, la présence du métal $M^1$ (fer ou aluminium) confère au matériau cathodique une conductivité électronique très supérieure à celle de $V_2O_5$ ainsi que la possibilité d'insérer davantage de lithium que dans $V_2O_5$.

Par ailleurs, la présence éventuelle dans ce matériau d'un deuxième métal $M^2$, par exemple du sodium, permet d'adapter les caractéristiques du matériau aux applications envisagées en réalisant une structure mixte à deux réseaux imbriqués, par exemple un système biphasé avec coexistence d'une phase orthorhombique et d'une phase monoclinique.

Généralement, lorsque $M^2$ est un autre métal que Al ou Fe, la quantité de $M^2$ est faible, c'est-à-dire que $x_1$ est au moins égal à 0,06.

A titre d'exemples de métaux alcalins et alcalino-terreux susceptibles d'être utilisés pour $M^2$, on peut citer le lithium, le sodium, le potassium, le calcium et le magnésium.

Les métaux de transition utilisés pour $M^2$ sont les métaux des périodes 3 à 12 du tableau à 18 colonnes de la Classification Périodique, c'est-à-dire le scandium, l'yttrium, les lanthanides, les actinides, le titane, le zirconium, l'hafnium, le vanadium, le niobium, le tantale, le chrome, le molybdène, le tungstène, le manganèse, le technétium, le rhénium, le fer, le ruthénium, l'osmium, le cobalt, le rhodium, l'iridium, le nickel, le palladium, le platine, le cuivre, l'argent et l'or.

Dans le cas de ces métaux de transition, on utilise par exemple le fer, le cobalt, le cuivre, le chrome ou le zirconium.

De préférence, selon l'invention, on utilise un bronze de formule $M^1_{x_1}V_2O_5$ avec $M^1$ ayant la signification donnée ci-dessus, et $x_1$ tel que $0{,}09 \leqq x_1 \leqq 0{,}13$ ou un bronze de formule $Fe_{x_1}Al_{x_2}V_2O_5$ avec $x_1$ et $x_2$ ayant les significations données ci-dessus.

Les bronzes utilisés comme matériau cathodique dans l'invention peuvent être préparés par des procédés classiques, en particulier par le procédé décrit dans FR-A- 2 616 013.

Ce procédé consiste à réaliser un échange ionique sur un xérogel de pentoxyde de vanadium pour remplacer les cations $H^+$ de ce gel par des atomes $M^1$ et éventuellement $M^2$, par exemple en immergeant le gel dans une solution aqueuse d'un sel de $M^1$ contenant éventuellement un sel de $M^2$.

Après cet échange ionique, on effectue un traitement thermique à une température modérée, choisie en fonction de $M^1$ et de $M^2$.

Selon l'invention, le bronze répondant à la formule donnée ci-dessus, est utilisé comme matériau cathodique dans un générateur électrochimique comportant une cathode, une anode et un électrolyte conducteur contenant des ions susceptibles d'être intercalés dans ce matériau.

Dans ce générateur, l'anode peut être à base de lithium, par exemple en lithium, en alliage de lithium ou en composé d'insertion du lithium tel que des composés à base de carbone ou d'oxyde, par exemple d'oxyde de tungstène.

Les électrolytes utilisés peuvent être des électrolytes liquides, des électrolytes solides ou encore des polymères conducteurs par ions lithium.

Lorsqu'on utilise un électrolyte liquide, celui-ci peut être constitué par une solution de sel de lithium dans un solvant approprié, généralement un solvant organique et aprotique, qui peut être choisi par exemple dans le groupe des esters et des éthers cycliques et à chaîne droite et de leurs mélanges.

A titre d'exemple de solvant organique utilisable, on peut citer le carbonate de propylène, le carbonate d'éthylène, le tétrahydrofurane, le dioxolane et le 1,2-diméthoxyéthane.

On peut encore utiliser comme solvant organique une sulfone, par exemple la diméthylsulfone, dans le but d'un fonctionnement dans la gamme de températures de 80°C à 180°C.

Les sels de lithium peuvent être choisis, par exemple, parmi le perchlorate de lithium, le tétrafluoborate de lithium, le trifluorométhanesulfonate de lithium, l'hexafluorophosphate de lithium, l'hexafluoroarséniate de lithium et leur mélange.

Lorsqu'on utilise un électrolyte solide, celui-ci peut être constitué par un verre au lithium obtenu par exem-

ple à partir de $P_2S_5$, $Li_2S$ et LiI ou de $B_2S_3$, $Li_2S$ et LiI.

Dans le cas où l'électrolyte est constitué par un polymère, il peut s'agir d'un oxyde de polyéthylène chargé d'un sel de lithium tel que ceux décrits précédemment.

Pour être utilisés dans le générateur de l'invention, le matériau cathodique est généralement mélangé à un matériau conducteur électronique tel que du noir de carbone, de la poudre ou des fibres de graphite et/ou de carbone. Dans ce cas, on peut préparer l'électrode en mélangeant une poudre du bronze de formule $M^1_{x_1}M^2_{x_2}V_2O_5$ avec du noir de carbone, de la poudre ou des fibres de graphite et/ou de carbone, puis comprimer ce mélange sous la forme voulue. On peut aussi déposer le mélange sur une amenée de courant constituée par exemple par une grille en matériau conducteur électronique tel que l'acier inoxydable ou le nickel. On peut aussi mélanger une poudre du bronze de l'invention avec du noir d'acétylène, du graphite et du polytétrafluoréthylène, puis incruster ce mélange sur une grille en acier inoxydable.

D'autres caractéristiques et avantages de l'invention apparaîtront mieux à la lecture de la description qui suit donnée bien entendu à titre illustratif et non limitatif, en référence au dessin annexé sur lequel :

- la figure 1 déjà décrite représente la courbe de décharge de $V_2O_5$, soit le potentiel en fonction du nombre d'ions lithium insérés ;
- les figures 2 à 5 sont des spectres de diffraction de rayons X de matériaux cathodiques conformes à l'invention ;
- la figure 6 illustre de façon schématique en coupe verticale un générateur électrochimique au lithium conforme à l'invention ;
- la figure 7 est un voltampérogramme de réduction-oxydation du matériau cathodique $Fe_{0,11}V_2O_5$ conforme à l'invention ;
- la figure 8 est un voltampérogramme de réduction-oxydation du matériau cathodique $V_2O_5$ donné à titre comparatif ;
- la figure 9 est un chronopotentiogramme de réduction du matériau cathodique $Fe_{0,11}V_2O_5$ illustrant le potentiel en fonction du nombre d'ions lithium insérés, avec pour la courbe 1 une densité de courant de 500µA/cm², pour la courbe 2 une densité de courant de 200µA/cm², et pour la courbe 3 une densité de courant de 100µA/cm² ;
- la figure 10 illustre le chronopotentiogramme de réduction à densité de courant constante de 500µA/cm² des matériaux cathodiques suivants : $V_2O_5$, $Al_{0,11}V_2O_5$, et $Fe_{0,11}V_2O_5$ ;
- la figure 11 illustre les chronopotentiogrammes de réduction à densité de courant constante de 40µA/cm² des matériaux cathodiques $V_2O_5$ et $Fe_{0,11}V_2O_5$ utilisés purs ;
- la figure 12 est un diagramme représentant la capacité spécifique en fonction du nombre de cycles galvanostatiques effectués dans le domaine de potentiel 3,7V - 1,7V pour les matériaux cathodiques : $Fe_{0,11}V_2O_5$, $Al_{0,11}V_2O_5$ et $V_2O_5$ ; et
- la figure 13 est un diagramme représentant l'évolution de la capacité spécifique en fonction du nombre de cycles galvanostatiques effectués dans le domaine potentiel 3,8V - 2,1V pour les matériaux cathodiques $V_2O_5$, $Fe_{0,11}V_2O_5$ et $Al_{0,11}V_2O_5$.

Les exemples suivants illustrent la préparation des matériaux cathodiques utilisés dans l'invention.

**Exemple 1** : Préparation de $Fe_{0,11}V_2O_5$.

On prépare tout d'abord un gel de pentoxyde de vanadium $V_2O_5$ en acidifiant une solution d'un sel de sodium tel que le métavanadate de sodium, de manière à obtenir l'acide décavanadique qui polymérise spontanément dans l'eau à la température ambiante pour donner par polycondensation le gel de pentoxyde de vanadium répondant à la formule :

$$(H^+_{0,33}(V_2O_5)^{0,33-}, 1,6H_2O).$$

Après dépôt du gel sur une lame de verre et séchage à l'air, on procède à une intercalation ionique pour remplacer les cations $H^+$ par le fer en immergeant la couche mince de xérogel de pentoxyde de vanadium sur la lame de verre dans une solution aqueuse à 0,1mol/l de nitrate de fer. Après 30min de réaction, on retire la lame de xérogel et on rince abondamment à l'eau distillée, puis on sèche à la température ambiante. On a ainsi obtenu le produit d'intercalation hydraté de formule $Fe_{0,11}V_2O_5$, $2,35H_2O$.

On soumet ensuite le produit d'intercalation à un traitement thermique réalisé à une température de 535°C pendant environ 1h dans un four ouvert à l'air.

On obtient ainsi le bronze métallique de formule $Fe_{0,11}V_2O_5$.

La figure 2 représente le spectre de diffraction aux rayons X en géométrie de réflexion du produit en couche mince ainsi obtenu.

Le spectre obtenu démontre une orientation préférentielle extrêmement marquée des plans 001 qui

correspond à l'existence de plans horizontaux empilés selon l'axe c. Seules les raies 001 et 002 sont visibles avec des intensités relatives 100 et 27. Ce spectre est typique d'une phase de bronze orthorhombique alpha.

La figure 3 représente le spectre de diffraction aux rayons X du produit broyé qui est sensiblement différent de celui de la figure 1.

Le tableau 1 donne les intensités relatives des raies de diffraction de ce bronze en couche mince et sous forme de poudre.

Tableau 1

| hkl | 200 | 001 | 101 | 110 | 400 | 011 | 310 | 002 | 102 | 600 | 020 |
|---|---|---|---|---|---|---|---|---|---|---|---|
| Broyé | 12 | 100 | 18 | 43 | 38 | 12 | 20 | 15 | 7 | 7 | 15 |
| Couche mince | / | 100 | / | / | / | / | / | 27 | / | / | / |

**Exemple 2** : Préparation de $Al_{0,11}V_2O_5$.

On suit le même mode opératoire que dans l'exemple 1 pour préparer ce bronze orthorhombique, sauf que l'on utilise pour l'intercalation de l'aluminium, une solution de nitrate d'aluminium à 0,1mol/l, et on réalise le traitement thermique à une température de 600°C pendant 1 heure.

On obtient ainsi le bronze orthorhombique de formule $Al_{0,11}V_2O_5$. Les spectres de diffraction aux rayons X du produit en couche mince et du produit broyé sont représentés respectivement sur les figures 4 et 5.

Comme dans le cas du fer, seules les raies 002 et 001 sont visibles sur le spectre du produit en couche mince.

Les bronzes métalliques obtenus dans les exemples 1 et 2 peuvent être utilisés comme matériau cathodique dans le générateur électrochimique représenté sur la figure 6.

Pour cette utilisation, on prépare un mélange de poudre de bronze et de graphite comportant 90% en poids de graphite que l'on comprime sous la forme voulue.

Sur la figure 6, on voit que ce générateur comprend deux vis métalliques 1 et 3 disposées dans une enveloppe (2) en polytétrafluoroéthylène, entre lesquelles sont disposés successivement une anode (5) constituée par un disque d'alliage de lithium et d'aluminium LiAl fraîchement découpé de 14mm de diamètre, un séparateur (7) en fibres de verre, une cathode constituée par un disque (9) de 1cm$^2$ de surface et de 0,5mm d'épaisseur constitué du mélange d'environ 20mg de poudres comprenant 10% en poids de bronze et 90% en poids de graphite obtenu précédemment, et un électrolyte imprégnant le séparateur (7) en fibres de verre et la cathode (9).

L'électrolyte est constitué par une solution de perchlorate de lithium dans du carbonate de propylène distillé qui contient une mole (106,4g) de perchlorate de lithium par litre et on utilise 0,2ml de cet électrolyte pour imprégner le séparateur (7) et l'électrode positive (9).

L'ensemble des deux électrodes et du séparateur est comprimé par les deux vis métalliques (1) et (3) qui servent également de collecteurs de courant. La tension du générateur décrit ci-dessus est d'environ 3,5V.

On teste les propriétés électrochimiques du matériau cathodique constitué par $Fe_{0,11}V_2O_5$ en réalisant un cyclage voltampérométrique de l'électrode à une vitesse de 0,13mV/s.

Le voltampérogramme obtenu dans ces conditions qui illustre l'intensité (en $\mu$A) en fonction du potentiel (en V) par rapport à $Li/Li^+$, est représenté sur la figure 7.

A titre comparatif, on a représenté sur la figure 8, le voltampérogramme obtenu dans les mêmes conditions lorsque le matériau d'électrode est constitué par du $V_2O_5$ orthorhombique mélangé à du graphite dans les mêmes proportions.

Au vu des figures 7 et 8, on constate que le matériau cathodique de l'invention présente une excellente réversibilité alors qu'il n'en est pas de même dans le cas de l'oxyde $V_2O_5$.

Sur la figure 9, on a représenté les chronopotentiogrammes de réduction du matériau cathodique $Fe_{0,11}V_2O_5$ sous différentes densités de courant dans la gamme de potentiels située entre 3,6 et 1,8 volt, par rapport à l'électrode $Li/Li^+$.

Sur cette figure, la courbe 1 se réfère à une densité de courant de 500$\mu$A/cm$^2$ ; la courbe 2 se réfère à

une densité de courant de 200μA/cm² et la courbe 3 se réfère à une densité de courant de 100μA/cm².

La forme des courbes confirme les résultats obtenus par la technique voltampérométrique. Plus précisément, l'insertion du lithium dans le matériau cathodique de l'invention s'effectue en plusieurs étapes : les deux premières étapes situées à un potentiel moyen de 3,1V correspondent à l'insertion d'environ 0,9 ion lithium par mole de bronze ; la troisième située à 2,2V engage environ 0,8 ion lithium par mole de bronze et la quatrième située vers 1,9 V correspond à l'insertion d'environ 0,5 ion lithium par mole de bronze. On peut aussi tenir compte d'une étape complémentaire située vers 2,9V, à laquelle succède une décroissance lente et continue du potentiel au lieu de la brusque chute de potentiel classiquement observée avec $V_2O_5$ après l'insertion d'un ion lithium par mole de $V_2O_5$.

Ainsi, la capacité faradique maximale disponible lors de l'insertion du lithium dans le bronze $Fe_{0,11}V_2O_5$ est de l'ordre de 360Ah/kg.

L'influence de la densité de courant sur le signal de réduction du bronze met en évidence un comportement intéressant dans la mesure où la forme du signal ainsi que la capacité faradique ne dépendent pratiquement pas de la densité de courant dans la gamme de 100 à 500μA/cm².

Sur la figure 10, on a représenté les chronopotentiogrammes de réduction à densité de courant constante de 500μA/cm² (soit les variations du potentiel (en V) par rapport à $Li/Li^+$ en fonction du nombre d'ions Li insérés par mole de matériau), relatifs aux matériaux cathodiques constitués par un mélange de poudre de graphite et de poudre de $V_2O_5$, d'$Al_{0,11}V_2O_5$ ou de $Fe_{0,11}V_2O_5$ comprenant 90% de graphite.

Dans le cas des bronzes au fer ou à l'aluminium de l'invention, on observe

- la présence d'une décroissance lente et continue du potentiel entre 3V et 2,2V,
- un bilan faradique relatif aux deux premières étapes comparable à celui de $V_2O_5$ même sous de forts régimes de décharge, et
- la présence d'une troisième étape d'insertion sous de forts régimes de décharge, étape qui n'existe pas dans le cas de $V_2O_5$.

Sur la figure 11, on a représenté les chronopotentiogrammes de réduction à densité de courant constante de 40μA/cm² de matériaux cathodiques constitués uniquement par du $V_2O_5$ pur ou du $Fe_{0,11}V_2O_5$ pur.

Dans ce cas, la capacité faradique du bronze au fer de l'invention est très supérieure à celle de $V_2O_5$.

On évalue également les performances du bronze au fer en cyclage galvanostatique sur quatre étapes de réduction. Les résultats sont présentés sur la figure 12. Sur cette figure, on a également représenté les résultats obtenus dans les mêmes conditions avec le bronze à l'aluminium $Al_{0,11}V_2O_5$ et $V_2O_5$. Ces cyclages ont été effectués sous une densité de courant de 200μA/cm² dans une gamme de potentiels (3,7V - 1,7V) incluant les quatre étapes d'insertion.

La figure 12 illustre la capacité spécifique en fonction du nombre de cycles.

Les résultats obtenus mettent en évidence les potentialités du bronze au fer qui se présente comme un matériau très performant puisque 65% de la capacité faradique initiale (environ 400Ah/kg) est encore disponible après le 30ième cycle (soit 200Ah/kg), alors que dans le cas de $V_2O_5$, la capacité spécifique n'est plus que de 50Ah/kg, soit 20% de la capacité faradique initiale, après 30 cycles.

Le bronze au fer présente donc des performances très supérieures à celles de l'oxyde $V_2O_5$.

De même, le bronze à l'aluminium présente des performances supérieures à $V_2O_5$, puisque la capacité spécifique est environ 3 fois celle de $V_2O_5$ au bout de 30 cycles.

Sur la figure 13, on a représenté les résultats obtenus en cyclage galvanostatique effectué sur seulement 3 étapes de réduction, c'est-à-dire entre 3,9 et 2,1V/$Li/Li^+$ avec une densité de courant de 200μA/cm², sur les matériaux cathodiques : $Fe_{0,11}V_2O_5$, $Al_{0,11}V_2O_5$ et $V_2O_5$.

Dans ce cas, la capacité spécifique (en Ah/kg) est plus faible, mais comme précédemment pour $Fe_{0,11}V_2O_5$ et pour $Al_{0,11}V_2O_5$, elle reste supérieure à celle de $V_2O_5$ après 30 cycles.

## Revendications

**1.** Générateur électrochimique comprenant une anode (5), une cathode (9) comprenant un matériau cathodique à base d'oxyde de vanadium et un électrolyte conducteur contenant des ions susceptibles d'être intercalés dans le matériau cathodique, caractérisé en ce que le matériau cathodique est un bronze d'oxyde de vanadium de formule :

$$M^1_{x_1}M^2_{x_2}V_2O_5$$

dans laquelle $M^1$ représente le fer ou l'aluminium trivalent, $M^2$ représente un métal différent de $M^1$ de valence <u>n</u> choisi parmi les métaux alcalins, les métaux alcalinoterreux, les métaux de transition et l'aluminium, et $x_1$ et $x_2$ sont tels que

$0,06 \leqq x_1 \leqq 0,13$ ;
$0 \leqq x_2 \leqq 0,20$ ; et
$0,27 \leqq 3x_1 + nx_2 \leqq 0,39$.

**2.** Générateur électrochimique selon la revendication 1, caractérisé en ce que le matériau cathodique répond à la formule :

$$Fe_{x_1}V_2O_5$$

avec $0,09 \leqq x_1 \leqq 0,13$.

**3.** Générateur selon la revendication 1, caractérisé en ce que le matériau cathodique répond à la formule :

$$Al_{x_1}V_2O_5$$

avec $0,09 \leqq x_1 \leqq 0,13$.

**4.** Générateur selon l'une quelconque des revendications 2 et 3, caractérisé en ce que $x_1 = 0,11$.

**5.** Générateur électrochimique selon la revendication 1, caractérisé en ce que le matériau cathodique répond à la formule :

$$Fe_{x_1}Al_{x_2}V_2O_5$$

dans laquelle $x_1$ et $x_2$ sont tels que définis dans la revendication 1.

**6.** Générateur selon l'une quelconque des revendications 1 à 5, caractérisé en ce que l'anode est en lithium, en alliage de lithium, ou en composé d'insertion du lithium.

**7.** Générateur selon la revendication 6, caractérisé en ce que l'électrolyte est constitué par une solution de sel de lithium dans un solvant organique.

**8.** Générateur selon la revendication 7, caractérisé en ce que l'électrolyte est une solution de perchlorate de lithium dans du carbonate de propylène.

## Patentansprüche

**1.** Elektrochemischer Generator, umfassend eine Anode (5), eine Kathode (9), die einen Kathodenwerkstoff auf der Grundlage von Vanadiumoxid und einen Elektrolyt-Leiter aufweist, der Ionen enthält, die in den Kathodenwerkstoff einlagerbar sind,
**dadurch gekennzeichnet**, daß der Kathodenwerkstoff eine Bronze von Vanadiumoxid folgender Formel ist:

$$M^1_{x1}M^2_{x2}V_2O_5$$

in der $M^1$ das Eisen oder das dreiwertige Aluminium bedeutet, $M^2$ ein von $M^1$ verschiedenes Metall mit der Wertigkeit n repräsentiert, ausgewählt aus den Alkalimetallen, den Erdalkalimetallen, den Übergangsmetallen und Aluminium, und $x_1$ und $x_2$ derart gewählt sind, daß
$0,06 \leqq x_1 \leqq 0,13$;
$0 \leqq x_2 \leqq 0,20$ ; und
$0,27 \leqq 3x_1 + nx_2 \leqq 0,39$.

**2.** Elektrochemischer Generator nach Anspruch 1,
**dadurch gekennzeichnet,**
daß der Kathodenwerkstoff der Formel

$$Fe_{x1}V_2O_5$$

mit $0,09 \leqq x_1 \leqq 0,13$ genügt.

**3.** Generator nach Anspruch 1,
**dadurch gekennzeichnet,**
daß der Kathodenwerkstoff der Formel

$$Al_{x1}V_2O_5$$

mit $0,09 \leqq x_1 \leqq 0,13$ genügt.

4. Generator nach einem der Ansprüche 2 und 3,
**dadurch gekennzeichnet,**
daß $x_1 = 0,11$ ist.

5. Elektrochemischer Generator nach Anspruch 1,
**dadurch gekennzeichnet,**
daß der Kathodenwerkstoff der Formel

$$Fe_{x1}AL_{x2}V_2O_5$$

genügt, wobei $x_1$ und $x_2$ der Definition gemäß Anspruch 1 genügen.

6. Generator nach einem der Ansprüche 1 bis 5,
**dadurch gekennzeichnet,**
daß die Anode aus Lithium, aus einer Lithiumlegierung oder einer Einlagerungszusammensetzung von Lithium besteht.

7. Generator nach Anspruch 6,
**dadurch gekennzeichnet,**
daß das Elektrolyt durch eine Lösung von Lithiumsalz in einem organischen Lösungsmittel gebildet wird.

8. Generator nach Anspruch 7,
**dadurch gekennzeichnet,**
daß das Elektrolyt eine Perchloratlösung von Lithium in Polypropylenkarbonat ist.

## Claims

1. Electrochemical generator comprising an anode (5), a cathode (9) comprising a vanadium pentoxide-based cathode material and a conductive electrolyte containing ions which can be intercalated in the cathode material, characterized in that the cathode material is a vanadium pentoxide bronze of formula:

$$M^1_{x_1}M^2_{x_2}V_2O_5$$

in which $M^1$ represents the trivalent aluminium or iron, $M^2$ represents a metal different from $M^1$ of valency n chosen from among alkali metals, alkaline earth metals, transition metals and aluminium and $x_1$ and $x_2$ are such that
$0.06 \leqq x_1 \leqq 0.13$;
$0 \leqq x_2 \leqq 0.20$; and
$0.27 \leqq 3x_1 + nx_2 \leqq 0.39$.

2. Electrochemical generator according to claim 1, characterized in that the cathode material complies with the formula:

$$Fe_{x_1}V_2O_5$$

with $0.09 \leqq x_1 \leqq 0.13$.

3. Generator according to claim 1, characterized in that the cathode material complies with the formula:

$$Al_{x_1}V_2O_5$$

with $0.09 \leqq x_1 \leqq 0.13$.

4. Generator according to either of the claims 2 and 3, characterized in that $x_1 = 0.11$.

5. Electrochemical generator according to claim 1, characterized in that the cathode material complies with the formula:

$$Fe_{x_1}Al_{x_2}V_2O_5$$

in which $x_1$ and $x_2$ are as defined in claim 1.

6. Generator according to any one of the claims 1 to 5, characterized in that the anode is of lithium, lithium alloy, or lithium insertion compound.

7. Generator according to claim 6, characterized in that the electrolyte is constituted by a solution of lithium

salt in an organic solvent.

**8.** Generator according to claim 7, characterized in that the electrolyte is a solution of lithium perchlorate in propylene carbonate.

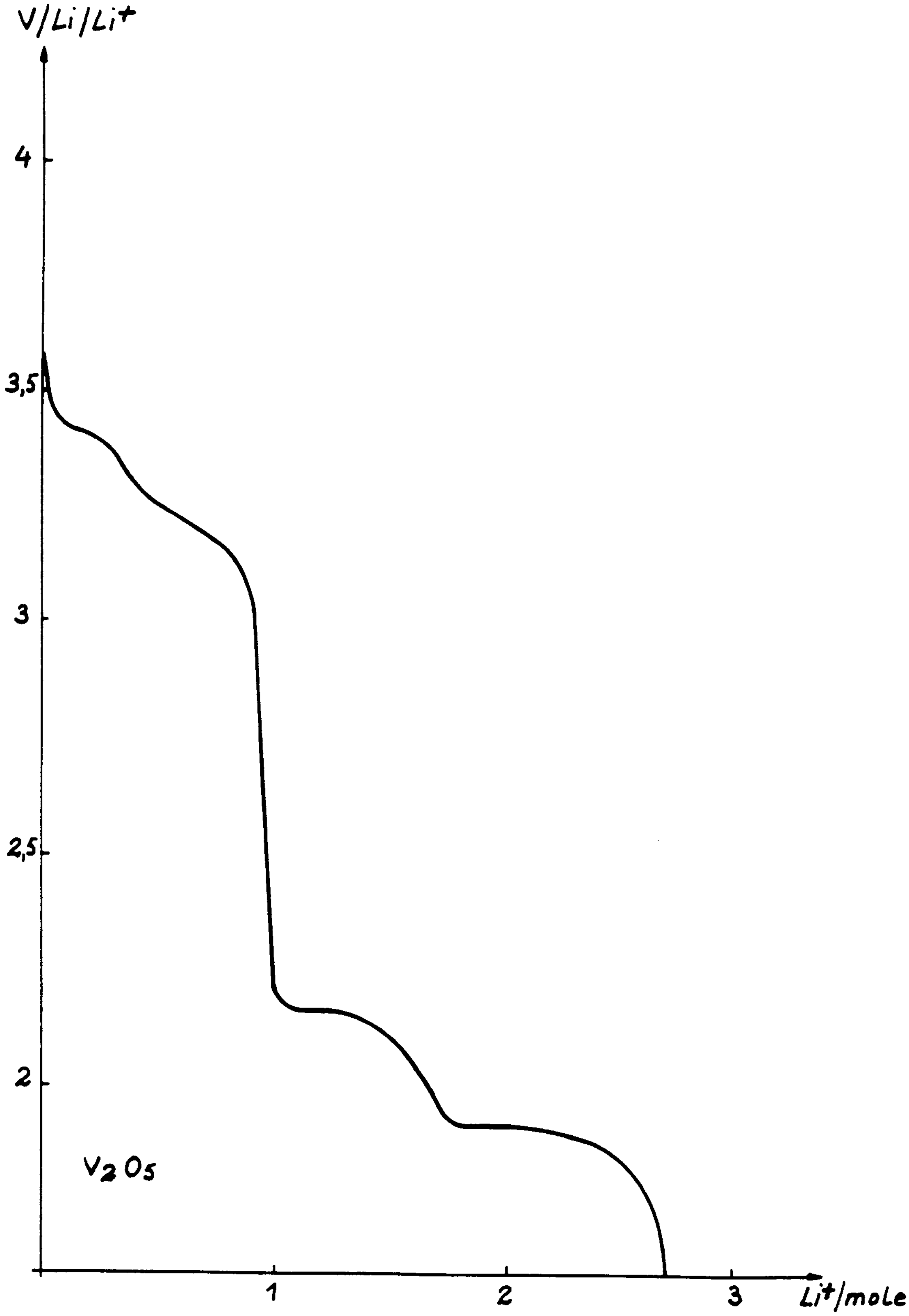


FIG. 1

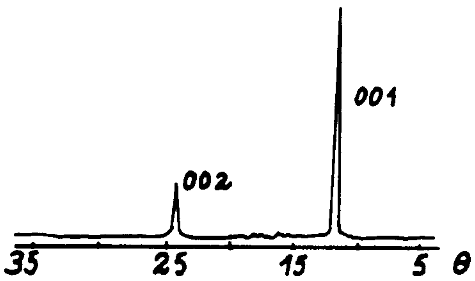


FIG. 2

FIG. 3

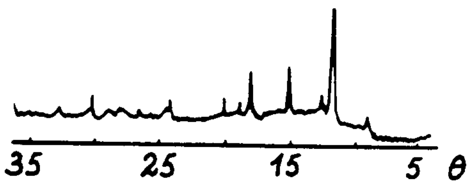


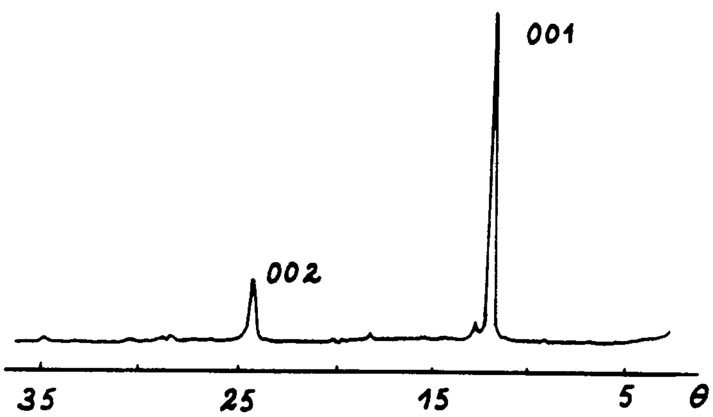


FIG. 4

FIG. 5

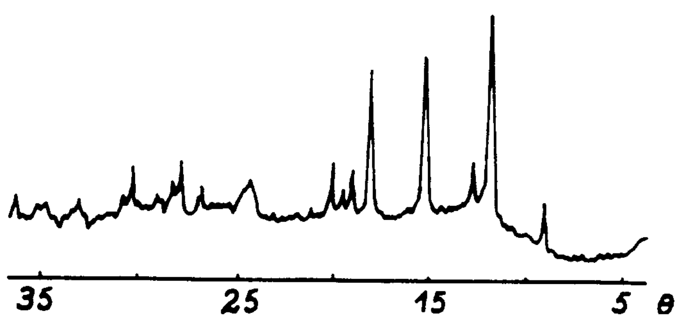

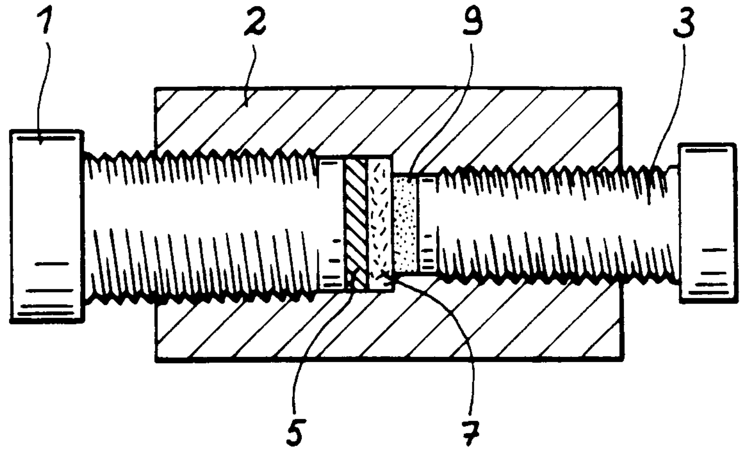
1
2
9
3
5
7

FIG. 6

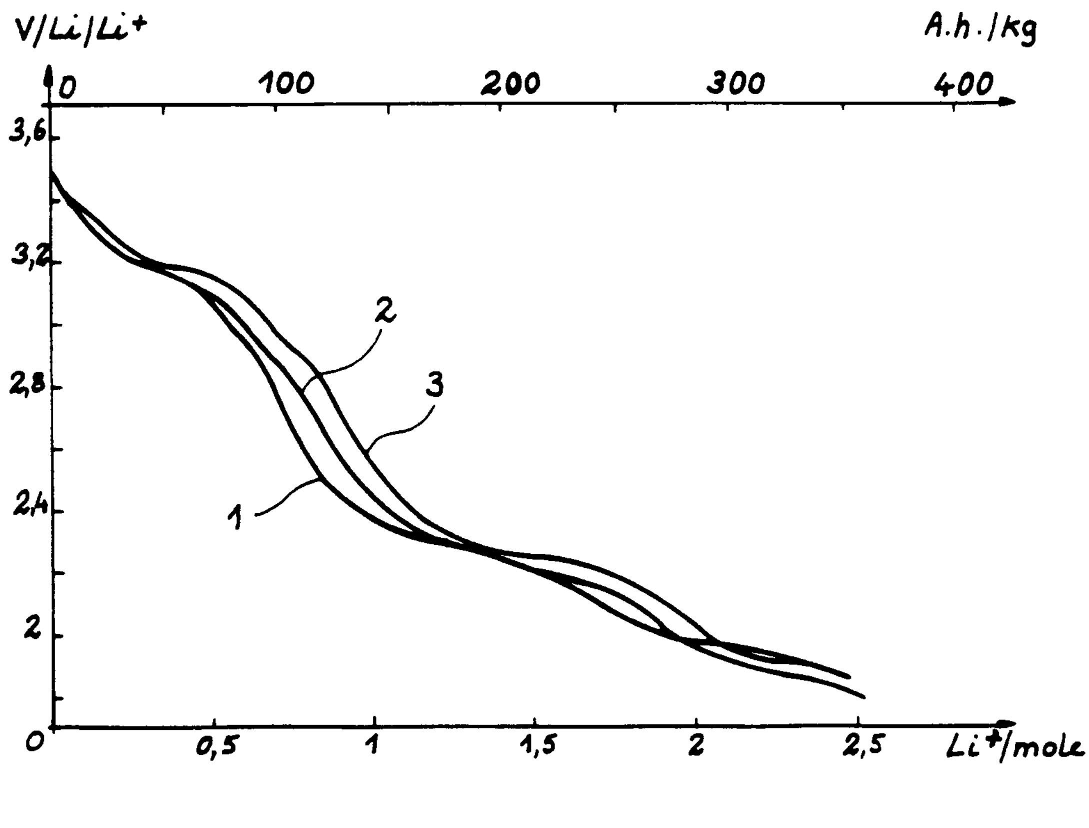
V/Li/Li+
A.h./Kg
0
100
200
300
400
3,6
3,2
2,8
2,4
2
0
0,5
1
1,5
2
2,5
Li+/mole
1
2
3

FIG. 9

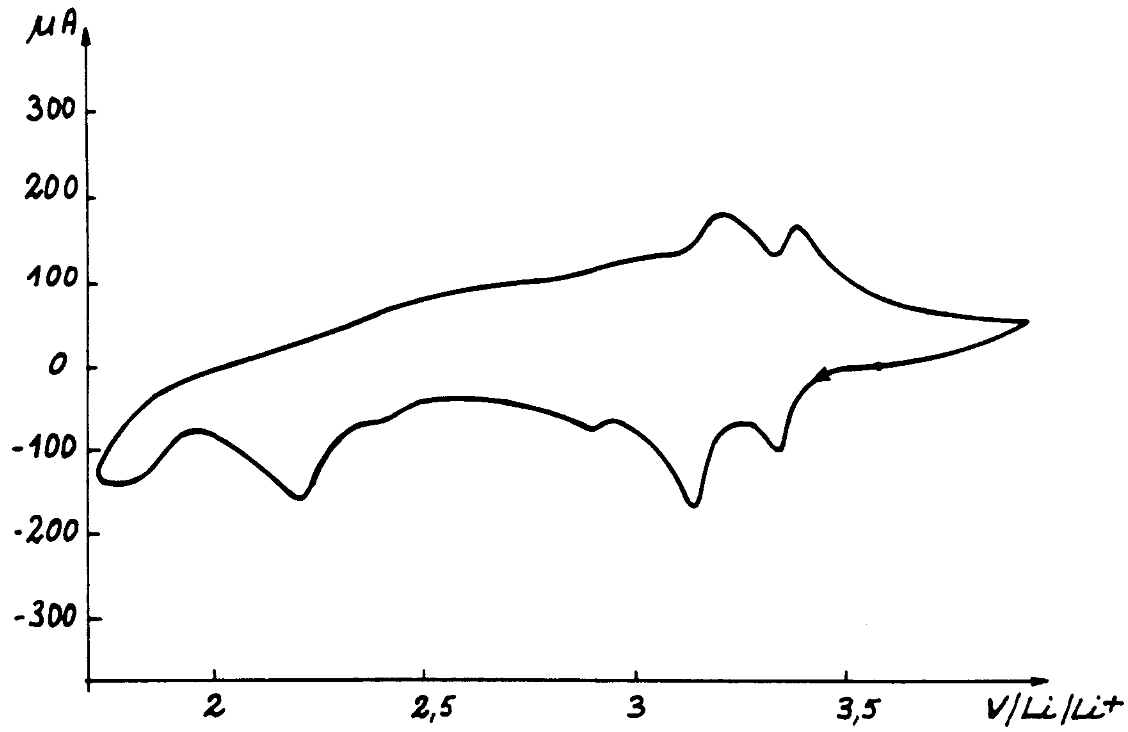
μA
300
200
100
0
-100
-200
-300
2
2,5
3
3,5
V/Li/Li+

FIG. 7

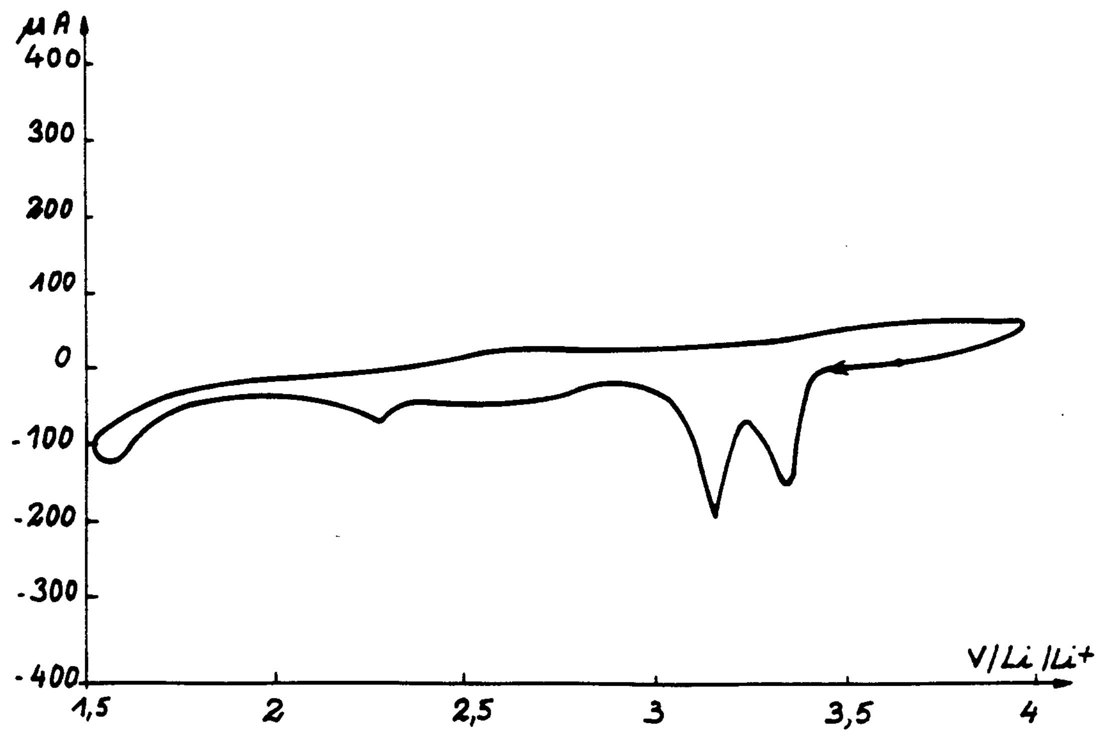
μA
400
300
200
100
0
-100
-200
-300
-400
1,5
2
2,5
3
3,5
4
V/Li/Li+

FIG. 8

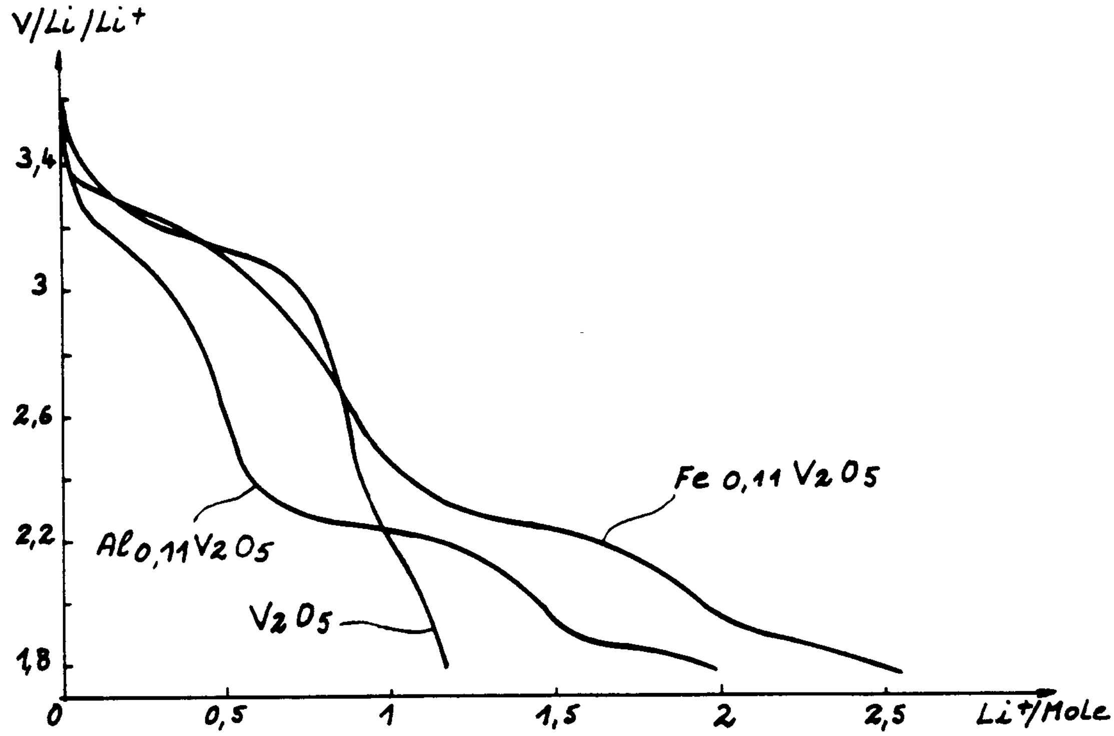
V/Li/Li+
3,4
3
2,6
2,2
1,8
0
0,5
1
1,5
2
2,5
Li+/Mole
Fe 0,11 V2 O5
Al0,11V2O5
V2O5

FIG. 10

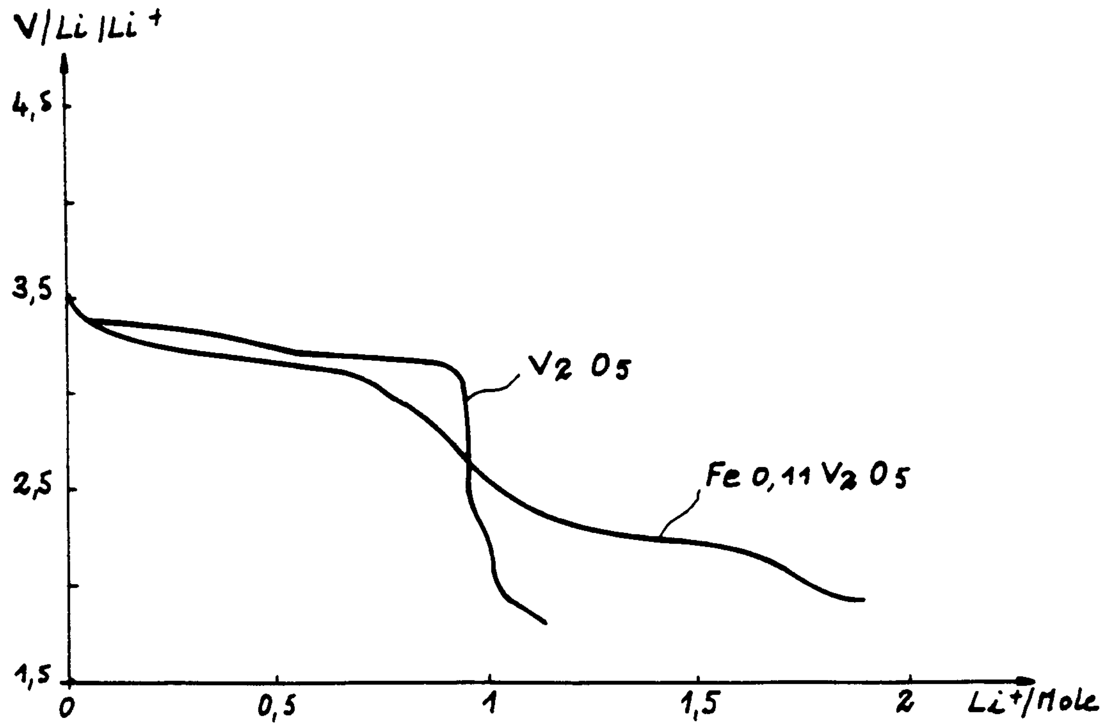
V/Li/Li+
4,5
3,5
2,5
1,5
0
0,5
1
1,5
2
Li+/Mole
V2 O5
Fe 0,11 V2 O5

FIG. 11

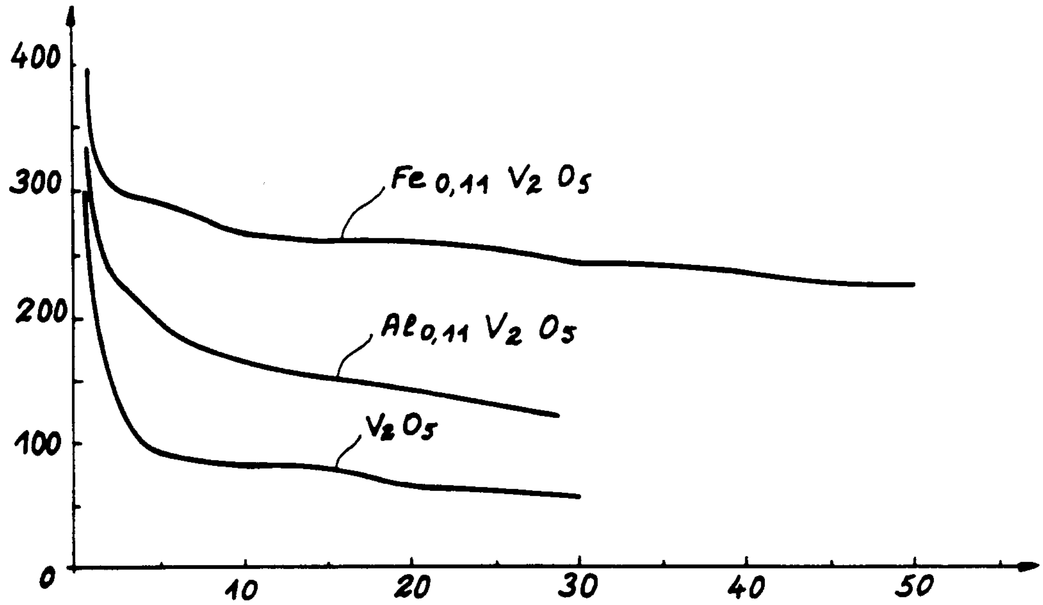
400
300
200
100
0
10
20
30
40
50
Fe 0,11 V2 O5
Al 0,11 V2 O5
V2 O5

FIG. 12

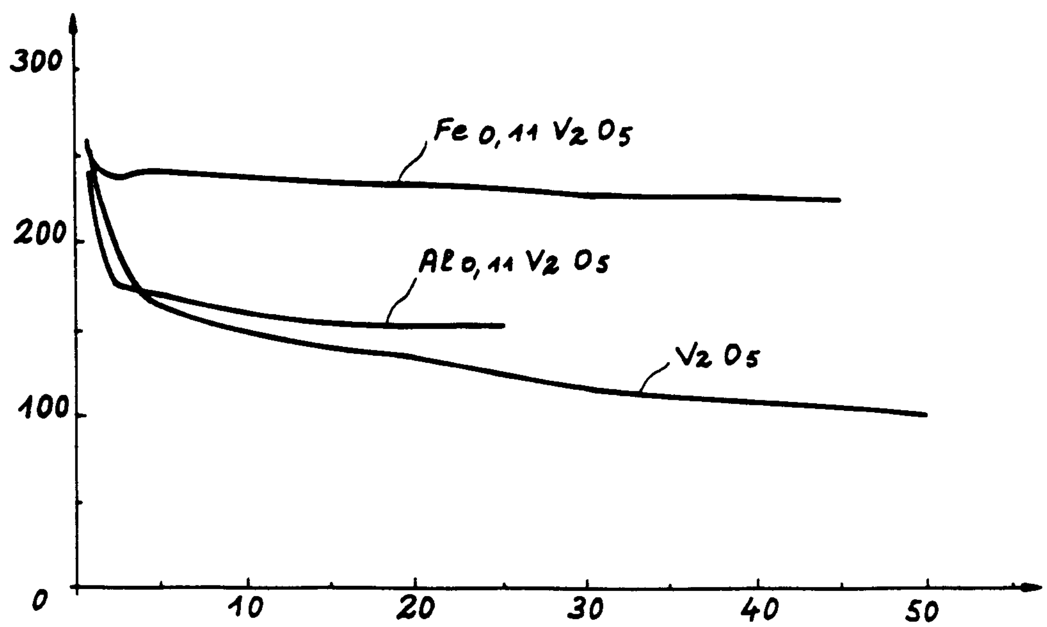
300
200
100
0
10
20
30
40
50
Fe 0,11 V2 O5
Al 0,11 V2 O5
V2 O5

FIG. 13